# EUROPÄISCHE PATENTANMELDUNG

(11) **EP 2 256 569 A1**
(43) Veröffentlichungstag der Anmeldung: **01.12.2010**
(21) Anmeldenummer: 10003689.6
(22) Anmeldetag: 03.04.2010
(51) Int. Cl.: G05B 19/418, G06Q 10/00

(54) **Verfahren und Vorrichtung zur Qualitätsprüfung von elektrischen, elektronischen und/oder mechanischen Komponenten**

(30) Priorität: 19.05.2009 DE 102009021879; 29.05.2009 DE 102009023424
(71) Anmelder: BuS Elektronik GmbH & Co. KG, 01589 Riesa (DE)
(72) Erfinder: Regner, Igor, 01307 Dresden (DE)
(74) Vertreter: Kaufmann, Sigfrid

(57) **Zusammenfassung**

Die Vorliegende Erfindung beschreibt ein Verfahren mit einer zugehörigen Vorrichtung zum maschinellen und automatisierten Prüfen von Prüflingen im Rahmen der Qualitätssicherung eines Produktionsprozesses, das es auf besonders einfache Art ermöglicht, eine Aussage darüber zu treffen, ob im Fehlerfall ein Fehler des Prüflings oder der Prüfeinrichtung vorliegt.

## Beschreibung

Die Erfindung betrifft die elektrische, optische und mechanische Qualitätsprüfung von o. g. Komponenten. Ihre Anwendung bietet sich insbesondere dann an, wenn die Stückzahlen der zu prüfenden Werkstücken groß sind oder der Prüfprozess aufwendig ist.

Qualitätssicherung ist ein unverzichtbarer Bestandteil der modernen Produktion geworden, wobei sich die Qualitätssicherung auf viele Bereiche der Produktion erstreckt. Ein wesentlicher Teil der Qualitätssicherung ist die Überprüfung, ob das hergestellte Produkt den Vorgaben entspricht. Dazu wird in der Regel am Ende des Produktionsprozesses das hergestellte Produkt einer oder mehreren Prüfungen unterzogen.

Prüfungen können in der Regel manuell oder maschinell und/oder automatisiert durchgeführt werden. Allgemein sind diese Prüfungen sehr zuverlässig, sodass ein als fehlerhaft geprüftes Produkt in der Regel auch fehlerhaft ist. Aus dem Stand der Technik sind bereits zahlreiche Lösungen zur Durchführung von automatisierten Überprüfungen von Werkstücken bekannt.

So werden in DE 101 41 459 A1 ein Verfahren und eine Vorrichtung zur Herstellung und Prüfung von Formkörpern beschrieben, wobei die Vorrichtung eine Spritzeinheit mit einem Zylinder und Kolben sowie mehrere in dem Zylinder mündende Zuführungseinrichtungen umfasst. Mit den Zuführungseinrichtungen wird im Zylinder ein Vorgemisch erzeugt, das über eine Mischeinrichtung in ein Formwerkzeug gespritzt wird. Das Verfahren erlaubt sowohl eine parallele als auch eine sequenzielle Überprüfung der hergestellten Formkörper mit Hilfe von mehreren Prüfeinrichtungen.

In DE 199 22 919 A1 wird eine Anlage zur Bearbeitung von Wafern in wenigstens einem Reinraum vorgestellt, wobei die Anlage eine Fertigungseinheit umfasst, bei der zur Überprüfung der in den verschiedenen Fertigungsschritten erreichten Bearbeitungsqualität mehrere Messeinrichtungen zur Ermittlung der Prozessparameter der Wafer eingesetzt werden. Die generierten Prozessdaten werden in einer Rechnereinheit fortlaufend erfasst, die aus den Prozessdaten Kenngrößen zur Beurteilung der Bearbeitungsqualität der Wafer errechnet.

Des Weiteren werden in DE 197 08 582 A1 ein Verfahren und eine Vorrichtung zur optischen Qualitätskontrolle von ebenen, geradlinig begrenzten Kunststeinen, bevorzugt gepressten plattenförmigen Betonformlingen gezeigt, bei dem zur Qualitätskontrolle sowohl die Oberfläche als auch die Kanten der Kunststeine mit Kameras aufgenommen und anschließend die ermittelten Daten, üblicherweise mit einem Rechner, ausgewertet werden. Um die Steine schnell und genau auf Kantenausbrüche überprüfen zu können, werden alternativ die Verwendung von Spiegeln/Reflektoren , der Einsatz von Schwenkeinrichtungen, mit denen verschiedene Kanten des Steins rasch vor dieselbe Kamera geschwenkt werden können, sowie der Einsatz von je einer Kamera für je eine Kante des Steins vorgeschlagen.

Unabhängig vom angewendeten Verfahren kommt es jedoch auch zu Prüfergebnissen, die nicht korrekt sind. Ein Produkt entspricht in diesem Fall zwar an sich den Vorgaben, wurde aber durch einen Fehler bei der Prüfung als fehlerhaft deklariert. Alle oben genannten Lösungen zeigen zwar Möglichkeiten auf, wie die Prüfschritte schneller ausgeführt werden können, Anregungen zur effektiveren Behandlung von fehlerhaften Prüfergebnissen werden jedoch keine gegeben.

Prüffehler können verschiedene Ursachen haben. So kann zum einen das Prüfmittel selbst fehlerhaft sein oder es kommt, vor allem bei manuellen Prüfprozessen, durch ein ungenaues Einlegen des Prüflings in das Prüfmittel zu einer fehlerhaften Prüfung des Prüflings.

Da dies bekannt ist, werden in der Regel als fehlerhaft geprüfte Produkte einer Fehleranalyse unterzogen. Mit dieser soll herausgefunden werden, ob das Produkt wirklich fehlerhaft ist, oder ob ein Prüffehler vorliegt, da es aus wirtschaftlicher Sicht erstrebenswert ist, alle Produkte, die fehlerfrei sind, auch für den vorgesehen Zweck zu verwenden.

Den als fehlerhaft deklarierten Prüfling einer Fehleranalyse zu unterziehen ist zwar sehr zeitaufwendig und kostenintensiv, aber notwendig, da sich auf diese Art feststellen lässt, ob und wo im Produktions- oder Prüfprozess ein Fehler vorliegt.
Bei bekannten Verfahren der automatisierten Prüfung ist vorgesehen, den Prüfling im Fehlerfall nach einer oder mehreren Wiederholungsprüfungen auf derselben Prüfeinrichtung mehr oder weniger kompliziert aus dem Prozess auszuschleusen, wenn der Fehler bestehen bleibt. Der Prüfling wird anschließend einer Fehleranalyse unterzogen und danach dem Prüfprozess wieder zugeführt, sollte bei der Fehleranalyse kein Fehler gefunden werden. Wiederholt sich dieser Fall, so muss davon ausgegangen werden, dass die Prüfeinrichtung fehlerhaft ist. Bis diese Aussage getroffen werden kann, müssen jedoch mehrere fehlerhaft geprüfte Prüflinge einer zeitaufwendigen und kostenintensiven Analyse unterzogen werden.

Im Fall der fehlerhaften Prüfeinrichtung ist zudem eine Fehler-Analyse an der Prüfeinrichtung notwendig. Diese ist auch wieder zeitaufwendig und kostenintensiv, da keine Prüfungen durchgeführt werden können, solange die Prüfeinrichtung geprüft und repariert wird.

Den bekannten Verfahren liegt also der Nachteil zugrunde, dass im Fehlerfall aufwendige Analysen notwendig sind. Bei einer Häufung von als fehlerhaft geprüften Prüflingen dauert es daher auch sehr lange, bis der Grund (Prüfling oder Prüfeinrichtung) für die Fehler ermittelt wird. Wird der Fehler in der Prüfapparatur selbst festgestellt, so muss für das Auswechseln oder Reparieren der Prüfapparatur der Prüfprozess unterbrochen oder aber zumindest eingeschränkt werden.

Aufgabe der Erfindung ist es daher, die bekannten Nachteile des Standes der Technik zu beseitigen, insbesondere soll die Zuverlässigkeit des Prüfprozesses erhöht werden. Weiterhin soll die benötigte Zeit für das Finden der Ursache bei einer Häufung von Fehlprüfungen verkürzt werden. Zudem soll es die Erfindung ermöglichen, den Prüfprozess fortzuführen, während die fehlerhafte Prüfapparatur untersucht/repariert wird.

Diese Aufgabe wird erfindungsgemäß durch das in Patentanspruch 1 offenbarte Verfahren und durch die Vorrichtung gemäß Patentanspruch 6 gelöst. Vorteilhafte Ausgestaltungen des Verfahrens und der Vorrichtung werden durch die abhängigen Unteransprüche offenbart.

Gemäß Anspruch 1 zeichnet sich das vorgestellte Verfahren dadurch aus, dass unmittelbar nach der Feststellung eines Fehlers auf einer Prüfeinrichtung der Prüfling auf einer Kontroll-Prüfeinrichtung, die zur ersten Prüfeinrichtung in Funktion, Abstimmung auf den Prüfling und Struktur (Geometrie) gleichartig oder technisch gleichwertig aufgebaut ist, erneut geprüft wird. Die Kontroll-Prüfeinrichtung stimmt also in allen Merkmalen mit der Prüfeinrichtung grundsätzlich überein, sie ist mit ihr identisch oder äquivalent.

Wird auf der ersten Prüfeinrichtung ein Fehler ausgegeben und auf der zweiten Prüfeinrichtung keiner, so ist damit schon sichergestellt, dass der Prüfling keinen Fehler aufweist und dieser den weiteren Produktions- oder Prüfprozess durchlaufen kann.

Findet dagegen sowohl auf der ersten, als auch auf der zweiten Prüfeinrichtung eine Fehlprüfung statt, so kann man mit sehr hoher Wahrscheinlichkeit davon ausgehen, dass der Prüfling fehlerhaft ist.

Sollte eine Häufung von Fehlern auf der ersten Prüfeinrichtung erfolgen, hingegen auf der zweiten Prüfeinrichtung keine, so lässt sich sofort die Aussage treffen, dass die erste Prüfeinrichtung defekt ist. Diese kann dann ausgetauscht werden, während der Prüfprozess auf der zweiten Prüfeinrichtung weiterläuft. Es kommt somit entgegen den bekannten Verfahren zu keiner Unterbrechung des Prüfprozesses.

Bei einer Häufung von Fehlern auf der ersten Prüfeinrichtung, die durch Fehler auf der zweiten Prüfeinrichtung bestätigt werden, lässt sich die Aussage treffen, dass ein Fehler in der Produktion vorliegt, der zu einem fehlerhaften Produkt führt.

Gemäß Anspruch 6 ist vorgesehen, dass das vorgestellte Verfahren mit einer Vorrichtung durchgeführt wird, die zumindest zwei identisch aufgebaute Prüfeinrichtungen aufweist, wovon eine im regelmäßigen Prüfprozess verwendet wird und eine nur dann, wenn auf der regelmäßig genutzten Prüfeinrichtung ein Prüfling als fehlerhaft geprüft wurde.

Durch dieses Prüfverfahren und der zugehörigen Vorrichtung, die vorteilhafterweise als Prüfzelle ausgebildet sein kann, lässt sich in kurzer Zeit und mit geringem Arbeitsaufwand mit sehr hoher Sicherheit eine Aussage darüber treffen, ob der Prüfling fehlerhaft ist oder ob auf der ersten Prüfeinrichtung eine fehlerbehaftete Prüfung stattgefunden hat. Zudem ist der Zeit- und Arbeitsaufwand für die Prüfung auf der identisch aufgebauten Prüfeinrichtung wesentlich geringer, als für ein Aus- und Einschleusen des Prüflings aus/in den Prüf- oder Produktionsprozess. Weiterhin lassen sich schnell Fehlerquellen lokalisieren. Eine Fehler-Analyse des Prüflings ist nur noch dann notwendig, wenn im Prüfprozess ermittelt wurde, dass ein Fehler im Produktionsprozess vorliegt. Zeit- und Arbeitsaufwand und damit verbundene Kosten können durch die Erfindung gesenkt werden.

Die Erfindung wird nachfolgend anhand eines Ausführungsbeispiels und den dabei verwendeten vier Figuren näher erläutert.

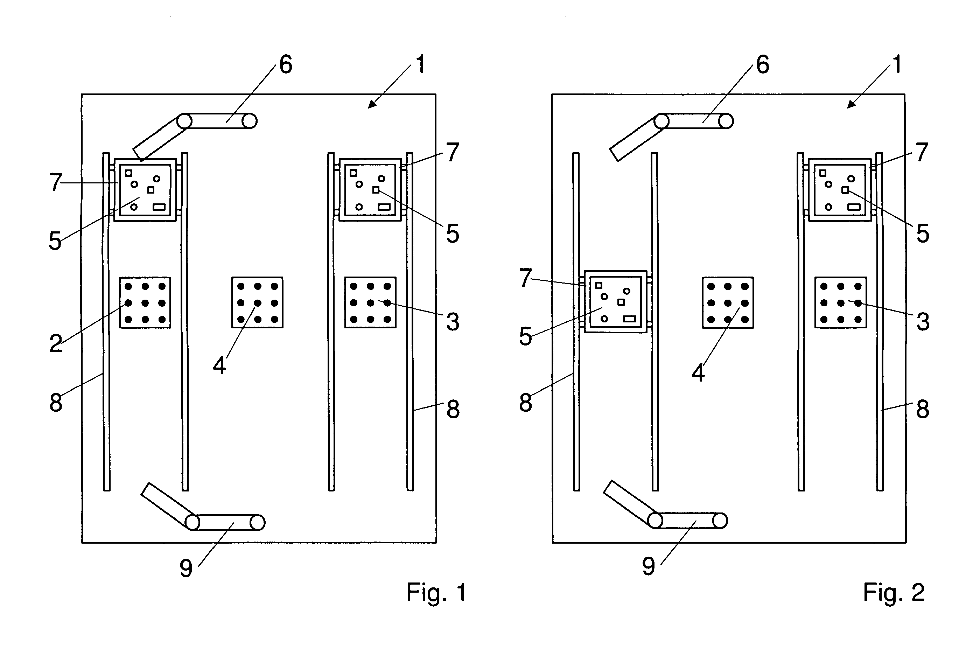

Fig. 1 zeigt die Prüfzelle 1, die über zwei identische Prüfeinrichtungen 2 und 3 und eine Kontroll-Prüfeinrichtung 4, die eine Redundanz bezüglich der Prüfeinrichtungen 2 und 3 darstellt, verfügt. Auf den Prüfeinrichtungen 2 und 3 werden im Normalbtrieb die Prüflinge 5, die von eine Zuführeinrichtung 6 in einem Prüflingsträger 7 eingelegt sind und von einer Transporteinrichtung 8 bewegt werden, geprüft. Mit der Prüfzelle ist es möglich, auf den Prüfeinrichtungen 2 und 3 unabhängig voneinander zu prüfen. Die Kontroll-Prüfeinrichtung 4 dient sowohl der Prüfeinrichtung 2 als auch Prüfeinrichtung 3 als Kontroll-Prüfeinrichtung.

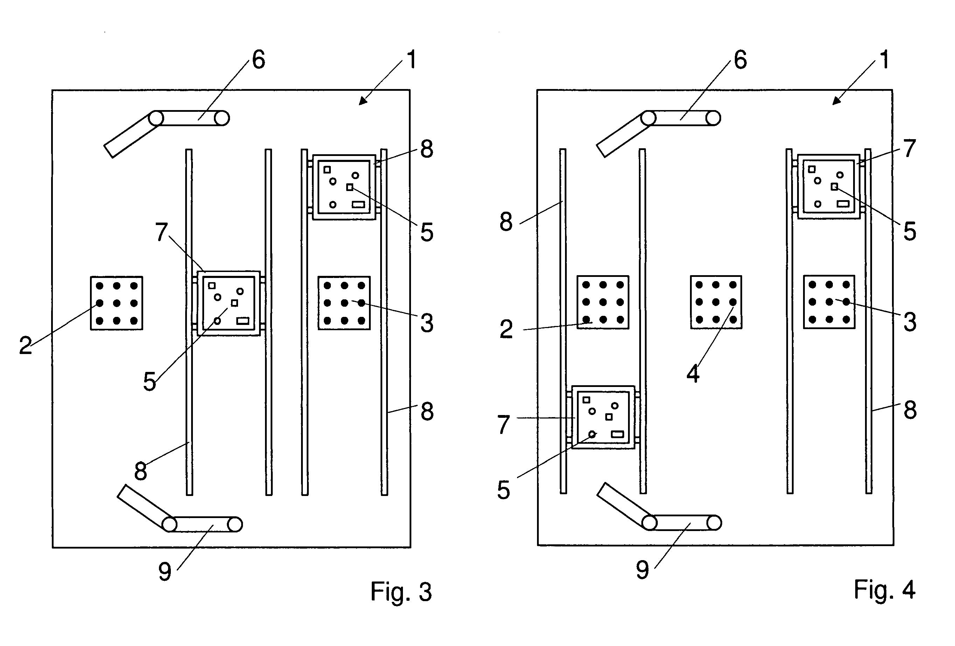

Wird auf Prüfeinrichtung 2 oder 3 ein Fehler festgestellt (Fig. 2), so wird durch eine Steuereinheit (nicht dargestellt) veranlasst, dass derder Prüflingsträger 7 zusammen mit dem Prüfling 5 in den Bereich der Kontroll-Prüfeinrichtung 4 bewegt und dort der Prüfling erneut geprüft (Fig 3) wird. Nach Abschluss der Prüfung wird der Prüfling durch eine Entnahmeeinrichtung 9 dem weiteren Produktions- oder Prüfprozess zugeführt (Fig 4). Die nächste Prüfung findet wieder auf der Prüfeinrichtung 2 bzw. 3 statt.

Die Prüfeinrichtungen 2 und 3 teilen sich folglich eine Kontroll-Prüfeinrichtung. Dies ist möglich, da die Wahrscheinlichkeit dafür, dass auf den Prüfeinrichtungen 2 und 3 gleichzeitig ein Fehler festgestellt wird und die Kontroll-Prüfeinrichtung 4 von den Prüfeinrichtungen 2 und 3 gleichzeitig beansprucht würde, sehr gering ist. Zudem wäre dieser Fall ein Indiz dafür, dass ein Fehler innerhalb des Produktionsprozesses vorliegt, der zu fehlerhaften Prüflingen führt.

### Liste der verwendeten Bezugszeichen

1. Prüfzelle
2. Prüfeinrichtung
3. Prüfeinrichtung
4. Kontroll-Prüfeinrichtung
5. Prüfling
6. Zuführeinrichtung
7. Prüflingsträger
8. Transporteinrichtung
9. Entnahmeeinrichtung

## Patentansprüche

1. Verfahren zur elektrischen, elektronischen, mechanischen, optischen und/oder funktionellen Qualitätsprüfung von elektrischen, elektronischen, mechanischen oder optischen Prüflingen innerhalb eines Produktionsprozesses, **dadurch gekennzeichnet, dass** die Prüflinge (5) in einer ersten Prüfung mittels einer Prüfeinrichtung (2) geprüft werden und bei Feststellung eines Fehlers unmittelbar von einer Kontroll-Prüfeinrichtung (4), die identisch oder äquivalent zur Prüfeinrichtung (2) aufgebaut ist, einer Kontrollprüfung unterzogen werden, wobei ,
- falls die Kontroll-Prüfeinrichtung (4) keinen Fehler feststellt, der betroffene Prüfling an den folgenden Produktionsprozess weitergegeben wird,
- falls die Kontroll-Prüfeinrichtung (4) ebenfalls einen Fehler feststellt, der betroffene Prüfling aus dem Prozess ausgeschleust und einer Fehler-Analyse unterzogen wird,
- falls eine Häufung von Fehlern auf Prüfeinrichtung (2), jedoch keine Häufung auf der Kontroll-Prüfeinrichtung (4) auftritt, die Prüfeinrichtung (2) ausgetauscht wird, und während des Austauschs der Prüfeinrichtung (2) der Prüfprozess von der Kontroll-Prüfeinrichtung (4) übernommen wird,
- und falls eine Häufung von Fehlern auf beiden Prüfeinrichtungen (2, 4) auftritt, der Teil des Produktionsprozesses, der vor der Qualitätsprüfung liegt, auf systematische Fehler untersucht wird.

2. Verfahren nach Anspruch 1, **dadurch gekennzeichnet, dass** die Kontroll-Prüfeinrichtung (4) zur Kontrolle mehrerer Prüfeinrichtungen (2) eingesetzt wird.

3. Verfahren nach Anspruch 1, **dadurch gekennzeichnet, dass**, wenn bei der Prüfung des Prüflings (5) auf der Prüfeinrichtung (2) ein Fehler festgestellt wird, der Prüfling der Prüfeinrichtung (2) entnommen und der Kontroll-Prüfeinrichtung (4) zugeführt wird.

4. Verfahren nach Anspruch 1, **dadurch gekennzeichnet, dass**, wenn bei der Prüfung des Prüflings (5) auf der Prüfeinrichtung (2) ein Fehler festgestellt wird, die Prüfeinrichtung (2) vom Prüfling entfernt und die Kontroll-Prüfeinrichtung (4) an den Prüfling herangeführt wird.

5. Verfahren nach Anspruch 3 oder 4, **dadurch gekennzeichnet, dass** der Prüfling (5) einzig auf der Kontroll-Prüfeinrichtung (4) geprüft wird, wenn die Fehlerrate auf der Prüfeinrichtung (2) die Fehlerrate der Kontroll-Prüfeinrichtung (4) um ein vorbestimmtes Maß überstieg.

6. Prüfzelle zur Durchführung des Verfahrens nach Anspruch 1 bestehend aus zumindest einer Prüfeinrichtung, zumindest einer Zuführeinrichtung, zumindest einem Prüflingsträger, zumindest einer Transporteinrichtung, zumindest einer Entnahmeeinrichtung und einer Steuereinrichtung, **dadurch gekennzeichnet, dass** sie zusätzlich zumindest eine Kontroll-Prüfeinrichtung (4) beinhaltet, die zur Prüfeinrichtung (2) identisch aufgebaut ist, und die Steuereinheit so programmiert ist, dass sie bei jeder Feststellung eines Fehlers durch die Prüfeinrichtung (2) eine Prüfung des betroffenen Prüflings mit der Kontrolle-Prüfeinrichtung (4) veranlasst, wobei sich die mit der Prüfeinrichtung (2) und die mit der Prüfeinrichtung (4) durchgeführten Prüfungen entsprechen.
